# EUROPÄISCHE PATENTSCHRIFT

(11) **EP 0 726 449 B1**
(45) Veröffentlichungstag und Bekanntmachung des Hinweises auf die Patenterteilung: **08.12.1999**
(21) Anmeldenummer: 96101612.8
(22) Anmeldetag: 05.02.1996
(51) Int. Cl.: G01G 19/02, G01G 3/13

(54) **Tragbare Messvorrichtung zur Gewichtsbestimmung von Fahrzeugen**
Portable measuring device for detecting the weight of a vehicle
Dispositif de mesure portatif pour déterminer le poids d'un véhicule

(30) Priorität: 08.02.1995 DE 29502071 U; 03.08.1995 DE 19528549
(43) Veröffentlichungstag der Anmeldung: 14.08.1996
(73) Patentinhaber: Reich KG, Regel- und Sicherheitstechnik, 35713 Eschenburg (NL)
(72) Erfinder: Bender, Helmuth, D-35713 Eschenburg-Wissenbach (DE)
(74) Vertreter: Strasse, Joachim, Dipl.-Ing.

(56) Entgegenhaltungen:
- EP-A- 0 480 601
- DE-A- 3 336 438
- DE-A- 4 332 828
- US-A- 4 554 987

## Beschreibung

Die vorliegende Erfindung betrifft eine tragbare Meßvorrichtung mit mindestens einem piezoelektrischen Meßelement zur Gewichtsbestimmung von Fahrzeugen, insbesondere zur Gewichtsbestimmung von Wohnwagen und Anhängern.

Die vorliegende Erfindung betrifft insbesondere, aber nicht ausschließlich, eine Verbesserung einer tragbaren Meßvorrichtung, wie sie in der Offenlegungsschrift DE 43 32 828 beschrieben ist. Eine Draufsicht auf eine derartige Meßvorrichtung, die insbesondere zur Gewichtsbestimmung von im wesentlichen dreipunktabgestützten Anhängern, insbesondere von Wohnwagen oder dergleichen, gedacht ist, ist in Fig. 1 der genannten Offenlegungsschrift dargestellt. In einem ebenfalls in dieser Druckschrift beschriebenen Verfahren wird diese Meßvorrichtung jeweils in Richtung des aufgezeichneten Profils zur Gewinnung eines ersten Meßwerts von einem ersten Rad bzw. Radpaar und zur Gewinnung eines zweiten Meßwerts von einem zweiten Rad bzw. Radpaar überfahren. Ein dritter Meßwert wird durch Auflegen und anschließendes Entfernen der Anhängerkupplung auf bzw. von der Meßvorrichtung bestimmt. Die Meßvorrichtung umfaßt als wesentliche Bestandteile ein Gehäuse mit mindestens einem piezoelektrischen Meßelement, eine mit dem jeweiligen Meßelement verbundene Aufnahmeelektronik, der ein Regelelement zur Erhöhung des Eingangswiderstandes und zur Nivellierung der von der Aufnahmeelektronik umgesetzten Spannung nachgeschaltet ist, und schließlich einen Prozessor zur Steuerung des Regelelementes. Die einzelnen Funktionen der Waage können über Tasten ausgelöst bzw. abgerufen werden. Das Ergebnis der Einzelmessungen bzw. einer daraus berechneten Gesamtmessung wird in einem LCD-Anzeigefenster angezeigt.

In obengenannter Offenlegungsschrift wird das verwendete piezoelektrische Meßelement nicht näher beschrieben, jedoch sind aus anderen Druckschriften piezoelektrische Meßelemente für den Einsatz in tragbaren Waagen bekannt.

So wird z.B. in einer in der US-Patentschrift 4 793 429 beschriebenen Fahrzeugwaage ein piezoelektrischer Gewichtssensor in federndes Material eingeschlossen. Wie in dieser Druckschrift ausgeführt wird, ist insbesondere ein dünner, schmaler Sensor zur Ausführung einer exakten Messung nötig, da im Falle der Verwendung eines dickeren, breiteren Sensors das Aufprallen des Fahrzeugs zu falschen Meßergebnissen führen würde.

Bei der in der US-Patentschrift 4 714 121 beschriebenen Fahrzeugwaage wird eine rechteckige Lastzelle, die mit einem Dehnungsmeßstreifen verbunden ist, über Lagervorrichtungen in vertikaler Richtung beweglich gelagert.

Aus der US-Patentschrift 3 949 822 ist eine Fahrzeugwaage bekannt, die als Meßelement einen Biegebalken verwendet, auf den ein Dehnungsmeßstreifen aufgebracht ist.

Die GB-2 178 179 A beschreibt eine Fahrzeugwägevorrichtung zur Messung des von einem Fahrzeugrad übertragenen Gewichts und besteht aus einer Belastungsfläche, einem steifen Träger, der sich zwischen voneinander beabstandenden Trägerstützen erstreckt und die Belastungsfläche auf einem Zwischenabschnitt des Trägers stützt, der zwischen den Trägerstützen liegt und von diesen beabstandet ist. Sie umfaßt weiterhin einen Halbleiter-Dehnungsmeßstreifen, der an dem Träger an einer geeigneten Stelle angebracht ist. Zur Bestimmung des Gesamtgewichts werden die einzelnen gemessenen Gewichtswerte aufaddiert.

Aus der DE-OS-21 17 805 ist eine Wiegevorrichtung bekannt, in der die zu messende Gewichtskraft von oben auf einen seitlich eingespannten Träger wirkt, wobei eine Plattform, auf die der zu wiegende Gegenstand gestellt wird, über verschiedene Varianten von Schalensitzen auf den Geber wirkt.

Bei der in der GB-2 066 971 beschriebenen Wägevorrichtung für Kraftfahrzeuge drückt ein Kolben aufgrund einer auf ihn ausgeübten Gewichtskraft eine Flüssigkeit aus einem Behälter. Diese Verdrängung wird registriert und in eine Gewichtskraft umgerechnet.

All diesen aus dem Stand der Technik bekannten Meßelementen ist in nachteiliger Weise gemeinsam, daß sie nur bei statischer Messung, d.h. wenn das zu messende Rad bzw. Radpaar auf der Waage zum Stillstand kommt, korrekte Meßwerte liefern. Zur Durchführung einer statischen Messung sind die Meßvorrichtungen entsprechend großflächig auszuführen. Bei zu knapper Dimensionierung kann infolge der Trägheit des horizontal bewegten Gefährts, dessen Gewicht bestimmt werden soll, beim Befahren der Meßvorrichtung eine die Messung verfälschende Kraftkomponente entstehen, weshalb bei dynamischen Messungen falsche Meßwerte entstehen.

Aus der EP-0 502 803 Al ist eine Fahrzeugwägevorrichtung bekannt, die zwar dynamische Messungen ermöglicht, die jedoch zu diesem Zweck in die Fahrbahn eingelassen werden muß.

Aus der EP-0 480 601 A1 ist eine Brückenwaage mit einer auf mehreren Stützelementen aufliegenden und beweglichen Plattform bekannt. In den Stützelementen sind jeweils Meßelemente angeordnet, die einen im wesentlichen zweiteiligen Grundaufbau aufweisen.

Aus obengenannten Druckschriften sind teilweise aufwendige Weiterbildungen bekannt, bei denen unter größerem Rechenaufwand versucht wird, aus den von den Meßzellen dynamisch gewonnenen Ausgangssignalen den korrekten Meßwert zu ermitteln.

Aus der DE-OS-19 53 048 ist eine Lastfühleinrichtung bekannt, die zur Übertragung der auf eine Platte einwirkenden Gewichtskraft auf eine Lastzelle ein Kugel verwendet. Hierbei handelt es sich um eine hydraulische Vorrichtung mit Kolben und Zylinder.

Die Aufgabe der Erfindung besteht somit darin, eine tragbare Meßvorrichtung zur Gewichtsbestimmung zur Verfügung zu stellen, die bei kostengünstiger Herstellung und einfachem Aufbau sowohl ein dynamisches Meßverfahren, d.h. ein Überfahren der Waage, als auch statische Messung zuläßt, wobei die Abmessungen der Meßvorrichtung möglichst klein bleiben können und dennoch korrekte Meßergebnisse erzielt werden.

Erfindungsgemäß wird diese Aufgabe dadurch gelöst, daß eine Meßvorrichtung ein zweiteiliges Gehäuse bestehend aus einem Gehäuseoberteil und einem Gehäuseunterteil und mindestens ein Meßelement mit einem im wesentlichen zweiteiligen Grundaufbau bestehend aus einem Oberteil und einem Unterteil aufweist, wobei jeweils das Oberteil mit einer Aufnahmevorrichtung der Meßvorrichtung verbunden ist und das Oberteil und das Unterteil des Meßelementes zueinander beweglich gelagert sind, derart, daß die Aufnahmevorrichtung mit dem daran befestigten Gehäuseoberteil kippbar ist.

In einer vorteilhaften Ausführungsform ist diese Aufnahmevorrichtung so ausgelegt, daß sie auch mehrere der Meßelemente aufnehmen kann und als Stabilisierungsplatte, vorzugsweise aus Metall, ausgebildet ist. Alternativ kann die Aufnahmevorrichtung auch einstückig mit einem Gehäuseteil ausgebildet sein.

In besonders vorteilhafter Weise wird die bewegliche Lagerung des Oberteils des Meßelements gegenüber dem zugehörigen Unterteil dadurch erzielt, daß einer der beiden Teile einen halbkugelförmigen Vorsprung aufweist, der in eine halbkugelförmige Aussparung des anderen Teils eingreift, wobei die Tiefe der Aussparung geringer ist als die Höhe des Vorsprungs.

Für eine statische Gewichtsbestimmung ist es insbesondere von Vorteil, mindestens drei Meßelemente in einer Meßvorrichtung unterzubringen, wobei die Meßelemente nicht in einer Reihe, sondern vorteilhafterweise, beispielsweise bei Verwendung von drei Meßelementen, in Dreiecksform angeordnet werden. Eine ausführliche Erläuterung der Erfindung ist der Beschreibung und den beigefügten Zeichnungen zu entnehmen.
Die Zeichnungen zeigen folgendes:
- Fig. 1: eine perspektivische Ansicht einer erfindungsgemäßen tragbaren Meßvorrichtung zur Gewichtsbestimmung;
- Fig. 2: eine perspektivische umgekehrte Explosionsdarstellung einer erfindungsgemäßen Meßvorrichtung zur Gewichtsbestimmung;
- Fig. 3: eine teilweise geschnittene Ansicht entlang der Linie III-III von Fig. 1 in Ruhelage;
- Fig. 4: eine teilweise geschnittene Ansicht entlang der Linie III-III von Fig. 1 beim Befahren der Meßvorrichtung.

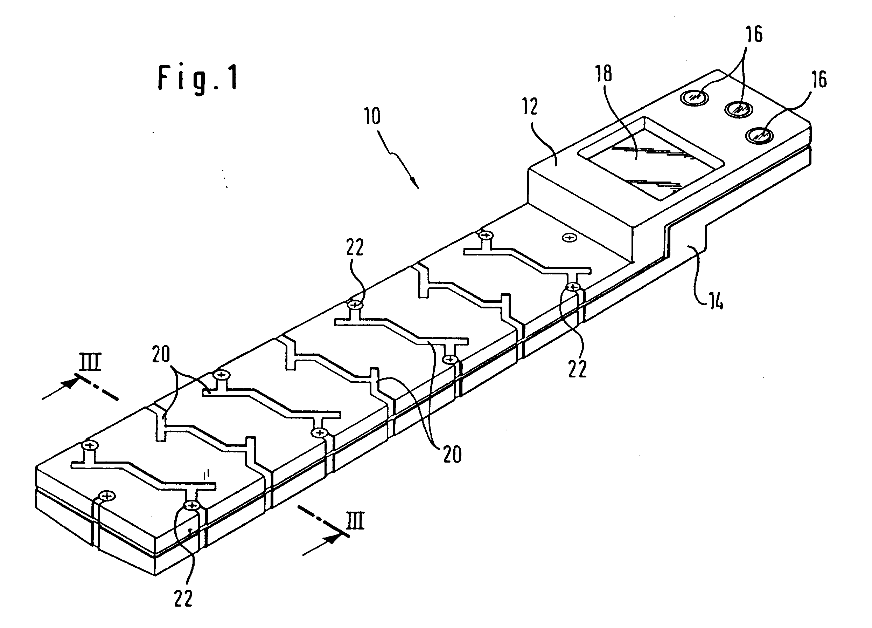

Fig. 1 zeigt eine tragbare Meßvorrichtung 10 zur Gewichtsbestimmung von im wesentlichen dreipunktabgestützten Anhängern, insbesondere für Wohnwagen oder dgl., bestehend aus einem Gehäuseoberteil 12, welcher mit Schrauben 22 an einem Gehäuseunterteil 14 befestigt ist. In den Gehäuseoberteil 12 sind zur Kennzeichnung der Richtung, in der die Meßvorrichtung zur Gewichtsbestimmung überfahren werden soll, Profilrillen 20 eingeprägt oder darauf aufgezeichnet. Des weiteren befinden sich außerhalb dieses durch Profilrillen gekennzeichneten Teils eine Anzeige 18, vorzugsweise eine LCD-Anzeige, sowie Bedienknöpfe oder Tasten 16.

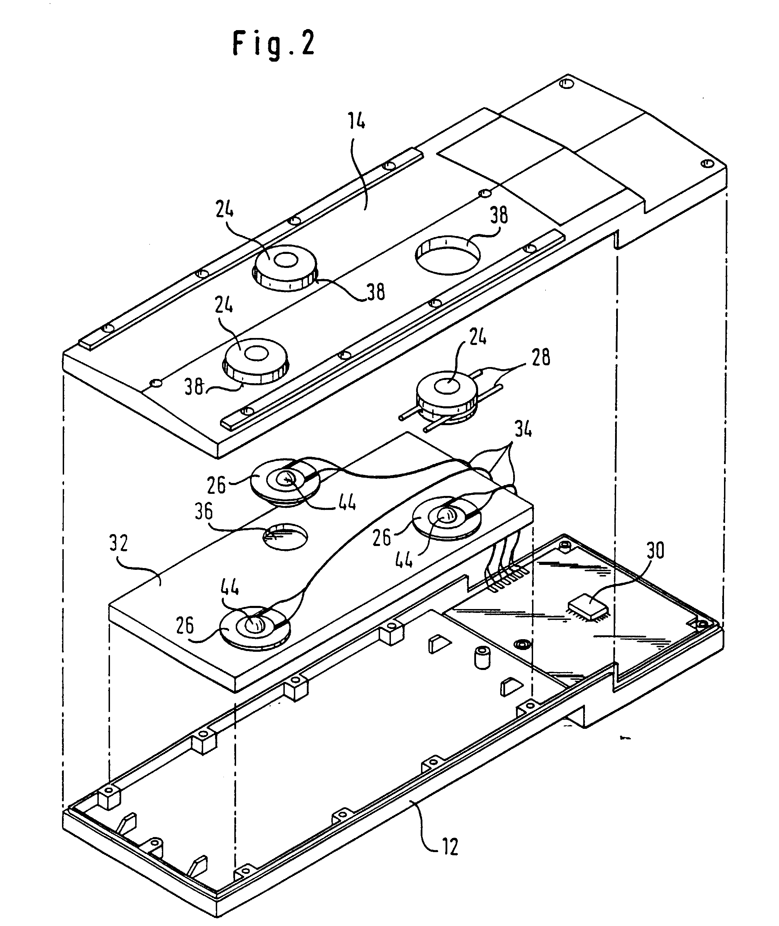

Im Gehäuse befinden sich neben einem oder mehreren der zu beschreibenden Meßelemente 24, 26 eine Aufnahmeelektronik (nicht dargestellt), vorzugsweise ein Regelelement zur Erhöhung des Eingangswiderstandes und zur Nivellierung der von der Aufnahmeelektronik umgesetzten Spannung (nicht dargestellt) sowie ein Prozessor 30 zur Steuerung des Regelelementes (Fig.2).

Die in der erfindungsgemäßen Meßvorrichtung verwendeten Meßelemente, siehe Fign. 2, 3, 4, sind im wesentlichen zweiteilig ausgebildet 24, 26 und sind über Leitungen 34 mit der Aufnahmeelektronik (nicht dargestellt) verbunden. Ein Oberteil 26 der Meßelemente ist mit einer Aufnahmevorrichtung 32 verbunden. Diese kann beispielsweise einstückig mit einem Gehäuseteil, vorzugsweise mit dem Gehäuseoberteil 12, ausgebildet sein, kann aber auch aus einer zusätzlichen Stabilisierungsplatte 32, vorzugsweise aus Metall, bestehen. Der Oberteil 26 wird in Vertiefungen 36 der Aufnahmevorrichtung 32 eingesetzt oder mittels Schrauben oder dgl. an dieser befestigt. Der Unterteil 24 des Meßelementes ist, vorzugsweise unter Verwendung zweier in Gehäuseelementen oder darin ausgebildeten Rillen beweglich gelagerter Metallstifte 28, federnd mit dem Gehäuse verbunden und in ihm gesichert. Deshalb ragt nur ein Teil des Meßelementunterteils 24 durch Öffnungen 38 des Gehäuseunterteils 14 hervor und liegt bei Durchführung einer Messung auf dem Boden 50 auf.

Fig. 2 zeigt insbesondere eine Ausführungsform unter Verwendung von drei Meßelementen, die in Dreieckform angeordnet sind, und somit die Durchführung einer statischen Gewichtsbestimmung erlauben. Bei Anordnung in einer Reihe wäre die Möglichkeit einer statischen Messung nur schwierig zu erfüllen, da dazu das zu messende Rad bzw. Radpaar auf der Meßvorrichtung 10 so balanciert werden müßte, daß keine Seite des Gehäuseunterteils 14 mit dem Boden 50 in Kontakt tritt.

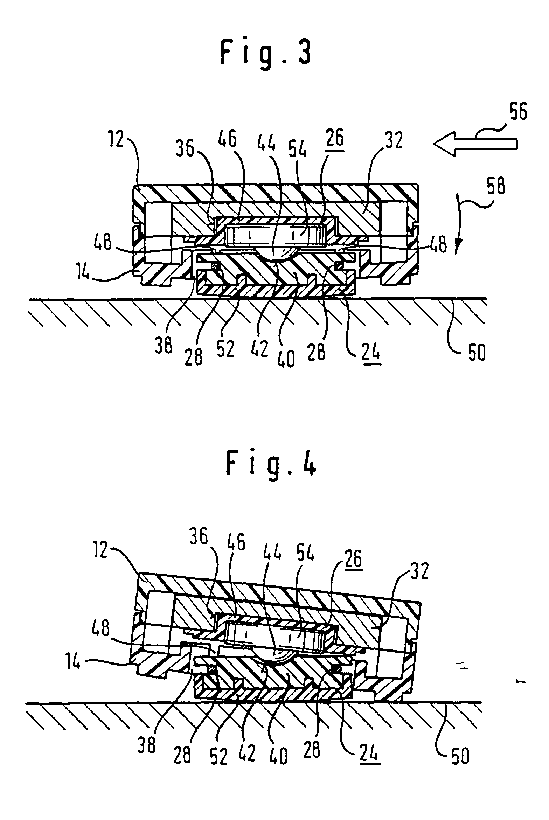

Die Funktionsweise des Meßelements wird im folgenden anhand der Fign. 3 und 4 erklärt. Fign. 3 und 4 zeigen einen Schnitt entlang der Linie III-III von Fig. 1, Fig. 3 den Ruhezustand, Fig. 4 den Zustand beim Befahren der Meßvorrichtung. Im dargestellten Fall handelt es sich entweder um eine Ausführungsform unter Verwendung eines einzelnen Meßelementes oder um eine Ausführungsform unter Verwendung mehrerer in Reihe angeordneter Meßelemente. Aus Fig. 3 geht hervor, daß der Oberteil 26 des Meßelements aus einem Teil 46 besteht, in dem das eigentliche Piezoelement 54 eingesetzt ist. Aus dem Piezoelement 54 ragt ein halbkugelförmiger Vorsprung 44 hervor. Der Unterteil 24 des Meßelements umfaßt einen gummierten, auf dem Boden 50 aufliegenden Dämpfungsteil 52, der insbesondere auch Unebenheiten des Bodens ausgleicht, und einen damit verbundenen Teil 40, an dessen dem Vorsprung 44 zugewandter Fläche eine Aussparung 42 in der Form einer Halbkugel oder eines Kugelsegments ausgebildet ist, mit einem vorzugsweise größeren Radius als der des halbkugelförmigen Vorsprungs 44. Die Höhe des Vorsprungs 44 ist größer als die Tiefe der Aussparung 42. Die federnden Stifte 28 greifen zum einen in seitliche Aussparungen des Elements 40, zum anderen in Aussparungen 48 des Gehäuseunterteils 14 oder darin ausgebildete Rillen ein.

Pfeil 56 in Fig. 3 deutet die Richtung an, in der die Meßvorrichtung überfahren wird, während Pfeil 58 in Fig. 3 zeigt, wie das Gehäuse beim Befahren der Meßvorrichtung gegenüber dem Boden 50 gekippt wird.

Dieser gekippte Zustand ist in Fig. 4 genauer dargestellt. Ihr ist zu entnehmen, daß der Unterteil 24 des Meßelements, gegenüber der ungekippten Darstellung von Fig. 3, unverändert, d.h. horizontal ausgerichtet ist. Oberteil 26 des Meßelements ist zusammen mit dem Gehäuse gegenüber dem Unterteil 24 gekippt. Dieses Kippen wurde dadurch ermöglicht, daß der Vorsprung 44 eine größere Höhe aufweist, als die Aussparung 52 tief ist. Die bewegliche Lagerung des Teils 24 mit den Stiften 28 im Gehäuseunterteil 14 in den Aussparungen 48 gestattet diese Kippung. Alternativ läßt sich der gleiche Effekt erzielen, wenn in Unterteil 24 ein Vorsprung und in Oberteil 26 eine Aussparung ausgebildet werden. Sobald beim Überfahren der Meßvorrichtung beide Seiten des Gehäuseunterteils den Kontakt mit dem Boden 50 verloren haben, d.h. nur noch Teil 52 des Meßelements mit dem Boden 50 Kontakt hat, wird korrekt gemessen. Bei der erfindungsgemäßen Meßvorrichtung ist dies infolge der Möglichkeit des Kippens wesentlich länger der Fall, als wenn Unterteil 24 und Oberteil 26 starr miteinander verbunden wären. Insofern vermindert sich der Aufwand für die nachbearbeitende bzw. auswertende Elektronik. Insbesondere läßt sich die Entstehung von Kraftkomponenten maßgeblich reduzieren, die eine korrekte Messung beeinträchtigen könnten.

## Patentansprüche

1. Tragbare Meßvorrichtung (10) mit mindestens einem piezoelektrischen Meßelement zur Gewichtsbestimmung von Fahrzeugen, insbesondere zur Gewichtsbestimmung von Wohnwagen und Anhängern,
dadurch gekennzeichnet,
daß die Meßvorrichtung (10) ein zweiteiliges Gehäuse bestehend aus einem Gehäuseoberteil (12) und einem Gehäuseunterteil (14) und mindestens ein Meßelement (24, 26) mit einem im wesentlichen zweiteiligen Grundaufbau bestehend aus einem Oberteil (26) und einem Unterteil (24) aufweist, wobei jeweils das Oberteil (26) mit einer Aufnahmevorrichtung (32) der Meßvorrichtung (10) verbunden ist und das Oberteil (26) und das Unterteil (24) zueinander beweglich gelagert sind, derart, daß die Aufnahmevorrichtung (32) mit dem daran befestigten Gehäuseoberteil (12) kippbar ist.

2. Meßvorrichtung nach Anspruch 1,
dadurch gekennzeichnet,
daß die bewegliche Lagerung des Ober- und Unterteils (24; 26) dadurch erzielt wird, daß einer der beiden Teile (24; 26) einen kugelabschnittförmigen Vorsprung (44) aufweist, der in eine kugelabschnittförmige Aussparung (42) des anderen Teils (26; 24) eingreift, wobei die Tiefe der Aussparung (42) geringer ist als die Höhe des Vorsprungs (44).

3. Meßvorrichtung nach Anspruch 1 oder 2,
dadurch gekennzeichnet,
daß die Aufnahmevorrichtung (32) einstückig mit einem Gehäuseteil ausgebildet ist.

4. Meßvorrichtung nach Anspruch 1 oder 2,
dadurch gekennzeichnet,
daß die Aufnahmevorrichtung (32) aus einer zusätzlichen Stabilisierungsplatte (32), vorzugsweise aus Metall, besteht.

5. Meßvorrichtung nach einem der vorhergehenden Ansprüche mit mindestens drei Meßelementen,
dadurch gekennzeichnet,
daß die Meßelemente nicht in einer Reihe angeordnet sind.

## Claims

1. A portable measuring device (10) having at least one piezoelectric measuring element for detecting the weight of a vehicle, in particular for detecting the weight of caravans and trailers
**characterized in**
that the measuring device (10) includes a two-part casing consisting of an upper casing half (12) and a lower casing half (14), and at least one measuring element (24, 26) of a substantially two-part basic structure comprising an upper part (26) and a lower part (24), said upper part (26) being connected to a receiving means (32) of the measuring device (10) and said upper part (26) and said lower part (24) being mounted movably with respect to each other such that the receiving means (32), with the upper casing half (12) mounted thereon, can be tilted.

2. The measuring device of claim 1
**characterized in**
that the movable mounting of the upper and lower parts (24; 26) is obtained in that one of the two parts (24; 26) has a projection (44) shaped like a spherical segment and engaging in a recess (42), likewise shaped like a spherical segment, of the respective other part (26; 24), with the depth of the recess (42) being smaller than the height of the projection (44).

3. The measuring device of claims 1 or 2
**characterized in**
that the receiving means (32) forms one piece with one casing part.

4. The measuring device of claims 1 or 2
**characterized in**
that the receiving means (32) consists of an additional stabilizing plate (32), preferably made of metal.

5. The measuring device of one of the preceding claims and comprising at least three measuring element's
**characterized in**
that the measuring elements are not arranged in a row.

## Revendications

1. Dispositif de mesure portable (10), comportant au moins un élément piézoélectrique pour la détermination du poids de véhicules, notamment pour la détermination du poids de caravanes et de remorques,
caractérisé en ce que
le dispositif de mesure (10) présente un bâti à deux pièces composé d'une partie supérieure (12) et d'une partie inférieure (14) et d'au moins un élément de mesurage (24, 26) avec une construction essentiellement à deux pièces - une partie supérieure (26) et une partie inférieure (24)-, la partie supérieure (26) étant reliée à un dispositif de réception (32) du dispositif de mesure (10) et les parties supérieure (26) et inférieure (24) de l'élément de mesurage étant mobiles l'une par rapport à l'autre, de sorte que le dispositif de réception (32) puisse être incliné avec la partie supérieure (12) du bâti qui y est fixée.

2. Dispositif de mesure suivant la revendication 1,
caractérisé en ce que
l'installation mobile des parties supérieure et inférieures (24; 26) est réalisée par le fait qu'une des deux pièces (24; 26) présente une élévation (44) en segment de sphère entrant dans une cavité (42) en segment de sphère de l'autre pièce (26 ; 24), la profondeur de la cavité (42) étant plus petite que la hauteur de élévation (44).

3. Dispositif de mesure suivant les revendications 1 ou 2,
caractérisé en ce que
le dispositif de réception (32) est conçu d'une pièce avec une partie du bâti.

4. Dispositif de mesure suivant les revendication 1 ou 2,
caractérisé en ce que
le dispositif de réception (32) est composé d'une plaque de stabilisation (32) supplémentaire, de préférence en métal.

5. Dispositif de mesure suivant l'une des revendications précédentes avec au moins trois éléments de mesurage,
caractérisé en ce que
les éléments de mesurage ne sont pas disposés en ligne.
